# EUROPEAN PATENT SPECIFICATION

(11) **EP 0 389 059 B1**
(45) Date of publication and mention of the grant of the patent: **30.11.1994**
(21) Application number: 90200660.0
(22) Date of filing: 21.03.1990
(51) Int. Cl.: H02J 7/14

(54) **Switching device for supplying current from a battery of a vehicle, fed by a dynamo, to a refrigerator to be carried along**
Schaltungsanordnung für die Stromversorgung eines mitgeführten Kühlschrankes durch eine mittels einer Dynamomaschine gespeisten Batterie eines Fahrzeuges
Appareil de commutation pour fournir du courant, à partir d'une batterie d'un véhicule alimentée par une dynamo, à un réfrigérateur transportable

(30) Priority: 22.03.1989 NL 8900702
(43) Date of publication of application: 26.09.1990
(73) Proprietor: S.E.I. Electronics C.V., NL-5667 HW Geldrop (NL)
(72) Inventor: van Beek, Dirk Albert, Ir., NL-5667 HW Geldrop (NL)
(74) Representative: Fieret, Johannes, Ir.

(56) References cited:
- DE-A- 3 622 157
- FR-A- 2 203 198
- FUNKSCHAU. vol. 57, no. 24, November 1985, MUNCHEN DE pages 80 - 82; JENSWITTJE: "Duo-Power im Auto"

## Description

The invention relates to a switching device for supplying current from a battery of a vehicle, fed by a dynamo, to a refrigerator to be carried along, said device comprising an input to be coupled to the battery, an output to be coupled to the refrigerator, a relay having a normally open contact which couples the input and the output of the switching device and a drive device, coupled to the input of the switching device, for driving said relay, said drive device being provided with a control device for driving the relay during successive cycles, whereby each cycle consists of a measuring time interval, during which the control device does not drive the relay, which is followed by an operating time interval, during which the control device drives the relay.

Such a switching device is known in the field of car-caravan combinations (see DE-A- 3622157), to which field the invention is otherwise not limited, whereby the refrigerator is placed inside the caravan and the switching device serves to prevent that the battery is undesirably discharged by the refrigerator, in case the dynamo can not supply sufficient current to the refrigerator. In the case mentioned the relay is provided in the car and the dynamo constitutes the drive device.

The reason for using the relay driven by the dynamo is connected with the following. In contrast to normal refrigerators, which are used in households and which only operate on 220 V, refrigerators in caravans and campers operate on 220 V, 12 V and on gas. Said 220 V are used at campings where 220 V connections are available. Gas is used at caravan sites where a 220 V connection is not available. When driving it is forbidden to use gas in caravans, in view of the risks involved. The use of 220 V and gas does not normally present any problems. Using 12 V is problematic, however. These problems are caused by the relatively high current that flows to the refrigerator, viz. about 10 Amp. When the engine is switched off this current may discharge the car battery so much that it is no longer possible to start the engine.

For the electric connection of the car to the caravan use is made of a 7-pole plug which is normalized in the EC. Said plug supplies current to inter alia the rear lights, the indicator lights and the brake lights. One connection is reserved for a permanent voltage wire, which is generally called a current supply wire. The constant current supply wire is directly connected to the plus terminal of the car battery, to which also the dynamo is connected. To said wire the interior light, water pumps, a television set and other current consumers may inter alia be connected. Also the refrigerator is connected to the constant current supply wire.

When driving the refrigerator is supposed to be switched on by means of the 12 V switch. The dynamo has sufficient capacity for supplying the refrigerator with current. So far there is no problem. A problem presents itself, however, when people have a rest. The car does not run and consequently the dynamo no longer supplies a voltage. Now the battery starts supplying current to the refrigerator itself. In case it is forgotten to turn the 12 V switch off the refrigerator will discharge the battery very fast. Already after a few hours it will no longer be possible to start the car as a result. This has happened to many caravan owners. Care should always be taken, therefore, that the 12 V switch is directly turned off when the car does not run. All kinds of remedies are used to keep this in mind. Thus people fix warning signs on the wheel or in the caravan, they have a clip on their key ring and the like. Other people no longer connect the 12 V switch en route. They prefer the inconvenience of having no refrigeration en route to facing the possibility of a car that will not start.

Conventional art does not offer an adequate solution for this problem. Various ways are being tried to tackle this problem, though.

With the above-mentioned solution according to prior art the relay, which is driven by the dynamo, sees to it that the refrigerator can only be supplied with current when the car engine is running. The disadvantage of this solution is, however, that when the engine is switched off, there is no voltage available in the caravan, and thus not only the refrigerator is disconnected, but also the other equipment in the caravan, among which the lighting.

A solution, proposed according to prior art, for overcoming the problems that have been pointed out, provides an extra current supply wire switched in the relay by means of the dynamo, as well as the usual constant current supply wire. To said connected extra current supply wire only the refrigerator is connected. All pins of the normalized 7-pole connection of the car to the caravan are in use, however. In order to create an extra pin various methods are used. In one solution the same pin is used for the connections of the left-hand and the right-hand rear lights, as a result of which one pin becomes available. This solution is not allowed and unsafe in traffic. Furthermore it has been tried to replace the 7-pole plug by a 12-pole plug. This latter plug required too much force, however. There is, however, a new 13-pole socket, which fits the old 7-pole caravan plugs. Conversely a 13-pole caravan plug does not fit an old 7-pole socket. Besides that there are solutions wherein a second socket-plug set is used, inter alia in a 1-pole, a 4-pole and a 7-pole version. None of these parts is normalized and they all require the provision of an extra wire, both in the car and in the caravan. Almost without any exception all new caravans have the normalized 7-pole plug.

With a further solution according to prior art for removing the disadvantages pointed out, use is made of an extra battery in the caravan. The constant current supply wire is again connected by a relay driven by the dynamo. To said constant current supply wire there are only connected the refrigerator and a DC-DC converter. Said DC-DC converter serves to increase the nominal voltage of 12 V, which is low because of voltage drops, by a few volts, so that the caravan battery can be charged while driving. All other current consumers in the caravan are connected to the caravan battery. For charging the caravan battery use is furthermore made of solar panels and of a 220 V charging device. This solution is costly and the caravan is loaded with a great deal of extra weight.

With all the above-mentioned solutions a diode bridge can be used as an alternative for the relay driven by the dynamo. The two solutions are electrically equal.

Where the above solutions are called electric solutions, the object of the invention is to provide an electronic solution, wherein the relay is not placed in the car but in the caravan, directly before the refrigerator. The refrigerator can thus be disconnected independently of the other consumers. A solution such as the one last-mentioned presents the following problem. Since it must be prevented that the refrigerator exhausts the battery, the current supply from the battery, or the dynamo, as the case may be, to the refrigerator should be interrupted when the battery voltage is below a predetermined value, whilst said current should be allowed to pass when the battery is above said pre-determined value, whereby said voltage might for example be 13 V with a battery having a nominal voltage of 12 V. In order to prevent oscillation a hysteresis should furthermore be provided with said switching voltage. In order to determine the possible interruption moment the battery voltage should be constantly monitored. As a consequence of the large voltage drop, which may amount to about 1 - 5 V in case of a refrigerator drawing about 10 Amp, across the current supply wire and the mass wire from the battery to the refrigerator, it is impossible to measure the battery voltage accurately during load. With a battery voltage of for example 14 V a voltage of no more than 13 - 9 V would be left at the refrigerator. Since this voltage drop is dependent on the wiring in the car and the caravan the voltage at the location of the refrigerator, where the current supply is to be interrupted, is different with each car-caravan combination, and can never have a fixed setting, therefore.

Consequently the object of the invention is more in particular to provide an electronic solution, which does not have the last-mentioned problem and/or any other problems, and in order to accomplish that objective a device of the kind mentioned in the preamble is proposed, which is characterized in that the drive device further comprises a voltage comparing device having an input, which is coupled to the input of the switching device for receiving a test voltage and an output for delivering a control signal, when the test voltage is higher than a threshold voltage related to the nominal value of the battery, whereby at the end of a measuring time interval the control device turns the relay on after having received the control signal during a predetermined relatively short time, as a result of which an operating time interval begins and the relay is driven for a predetermined relatively long time, after which the relay releases when the control signal is absent with as a possible additional condition that the control signal has been absent for a period of time which equals said relatively long time, as a result of which a measuring time interval begins.

According to the invention the driving device, and thus also the voltage comparing device and the control device, is an electronic circuit which, like the relay, is incorporated in the current supply wire at the location of the refrigerator, in the caravan, therefore.

When the car is driving, the battery is charged by the dynamo and the dynamo provides a sufficiently high voltage for feeding the refrigerator, which means that the test voltage is higher than the threshold voltage and that the relay will be picked up during the operating time intervals of for example one minute, but it will be released during the measuring time intervals of for example one tenth (0,1) of a second. This is based on the fact that in general the test voltage will be lower than the threshold voltage when the relay is picked up, which is caused by the voltage drop across the connecting wires as a result of the relatively large current wich is switched by the relay. When there is not connected a relatively heavy load to the output of the device according to the invention, however, or when the connecting wires to the device according to the invention have a very low resistance, the test voltage can stay above the threshold voltage when the relay is picked up and the operating time interval will be extended, and the relay will not release, therefore. The operating time interval cannot be ended before the test voltage drops below the threshold voltage.

When the test voltage stays below the threshold voltage during the measuring time interval, the measuring time interval will be extended and the relay will remain in released condition, therefore. In practice this may take place when the car engine is idling and a relatively heavy load, such as the lighting, is connected, in which case the dynamo cannot supply sufficient current to the refrigerator due to the low number of revolutions of the engine, and this may also take place when the engine is switched off.

By a maximum voltage on open circuit is meant the voltage of a fully charged, unloaded battery, this will be about 12.8 V with a 12 V battery. When the car is driving, the battery voltage may vary from 14 V to 14.5 V for example, dependent on the temperature. Naturally these values only apply when no heavy loads are connected. When too heavy loads are connected and the battery voltage drops below the maximum voltage on open circuit, a full battery will be discharged. As a threshold voltage a voltage may therefore be selected that corresponds with 13 V battery voltage.

When it is assumed that when the car is driving no inside lights are on in the caravan and there are no other loads, except for the refrigerator, that draw current from the battery via the constant current supply wire, the voltage of the battery can be determined exactly by interrupting the current supply to the refrigerator during the measuring time interval. When the battery voltage is lower than for example 13 V the relay will not be picked up and the current supply to the refrigerator will remain disconnected. The measuring time interval is now extended until the battery voltage rises above the threshold voltage. During the next operating time interval the relay will be picked up and it will release again at the beginning of the next measuring time interval, etc.

A complication with regard to keeping the relay picked up during the operating time interval occurs with car-caravan combinations that have very bad electric wiring, which means that the connecting wires have a very high electric resistance and therefore cause a voltage drop when current is being supplied to the refrigerator, so high that the input voltage of the proposed device is insufficient to keep the relay picked up. This means that the relay drive voltage becomes lower than the hold voltage of the relay, so that the relay will release prematurely, as a result of which there will no longer be a voltage drop across the connecting wires and the input voltage of the proposed device will rise above the pick-up voltage of the relay and the relay will pick up again, etc., which will result in rattling of the relay with a frequency of for example 100 Hz, with which frequency the refrigerator will be switched on and off, causing excessive wear on the relay contacts.

Also for this problem the invention offers a solution, and that because the drive device is furthermore provided with an auxiliary voltage comparing device having an input, which is coupled to the input of the switching device for receiving the test voltage and an output for delivering an auxiliary control signal, when the test voltage is lower than an auxiliary threshold voltage which is lower than the threshold voltage and which is higher than a voltage related to the maximum release voltage of the relay,which auxiliary control signal causes the control device to break off a running cycle prematurely by de-energizing the relay, as a result of which a measuring time interval begins.

Said auxiliary threshold voltage may for example be a voltage which, with a nominal battery voltage of 12 V, corresponds with 7 V battery voltage. If as a result of the picking-up by the relay the input voltage of the proposed device should drop below the auxiliary threshold voltage, a new cycle will immediately begin, therefore, and the relay cannot pick up again before the test voltage has been above the threshold voltage again during the measuring time interval of said cycle.

If, with released relay, the input voltage is below the threshold voltage the relay will remain released. However, if the input voltage is higher than the threshold voltage again the relay will be picked up after the measuring time interval. Therefore the input voltage of the circuit again may become lower than the auxiliary threshold voltage of 7 V for instance, due to a powered refrigerator and the bad wiring whereby as a result the operating time interval is terminated immediately and a new measuring time interval starts again. Thus now the relay will be cyclicly switched on and off with a maximum frequency being determined by the duration of the measuring time interval and which therefore might be 1 hertz, which prevents exessive wear of the contacts of the relay, the more so inasmuch as now the relay is switched off immediately when the input voltage falls below the auxiliary threshold voltage.

The invention will be described in more detail with reference to the drawing, in which:
Figure 1 shows a block diagram of a first embodiment of the circuit according to the invention;
Figure 2 shows a wiring diagram of the first embodiment shown in Figure 1;
Figure 3 shows the transfer characteristic of the asymmetric delay circuit shown in Figure 1;
Figure 4 shows various voltages occurring in practice as a function of time in the asymmetric delay circuit of Figure 2;
Figure 5 shows a block diagram of a second embodiment of the circuit according to the invention;
Figure 6 shows a wiring diagram of the second embodiment shown in Figure 5;
Figure 7 shows a first possibility of the transfer characteristic of the timer circuit and the RDC filter of Figure 6;
Figure 8 shows a second possibility of the transfer characteristic of the timer circuit and the RDC filter of Figure 6; and
Figure 9 shows a practical example of the voltage gradient at various points in the timer circuit and the RDC filter of Figure 6.

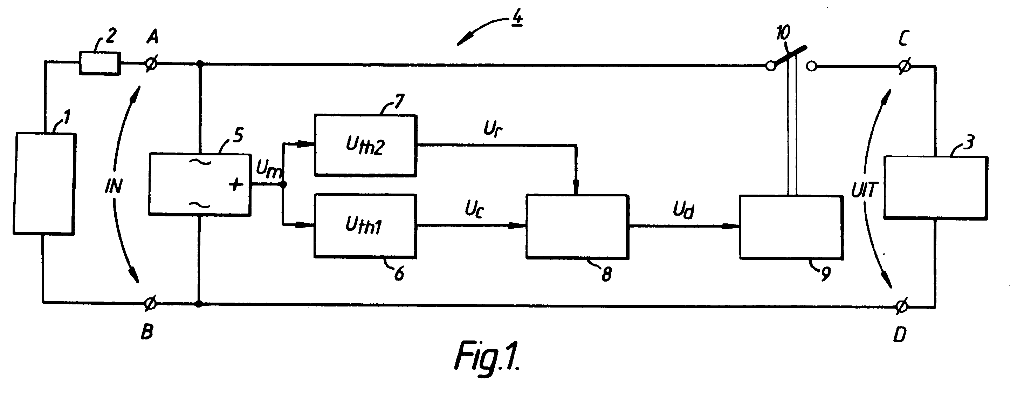

Reference numeral 1 in Figure 1 indicates a car battery which is connected to a car dynamo (not shown). Reference numeral 2 indicates a resistor, which diagrammatically represents the resistance of the connecting wires, that is, a constant current supply wire and a mass wire, both in the car and in the caravan. Reference numeral 3 indicates a refrigerator, for example placed in a caravan. The device according to the invention, which will be called the battery protection circuit hereinafter, is indicated by reference numeral 4. The input of the battery protection circuit 4 is indicated by IN and comprises the input terminals A, B, whilst the output of the battery protection circuit 4 is indicated by UIT and comprises the output terminals C and D. As is shown in Figure 1 the series circuit of the battery 1 and the resistor 2 are connected to the input IN of the battery protection circuit 4 and the caravan refrigerator is connected to the output UIT, of the battery protection circuit 4. The input voltage across the input terminals A, B of the battery protection circuit 4 is equal to the voltage of the battery 1 minus the voltage drop across the resistor 2.

Not essential for the invention, but efficient from a user's point of view, the battery protection circuit 4 is provided with a rectifier 5, as a result of which the connection of the battery protection circuit 4 to the battery 1 can be polarity insensitive. The output of the rectifier has a test voltage Uₘ. Furthermore the battery protection 4 is provided with a first voltage comparing device 6 and a second or auxiliary voltage comparing device 7, which may each be embodied in a threshold switch. The first threshold switch 6 compares the test voltage Uₘ with a higher threshold voltage than is done by the second threshold switch 7. The threshold voltages for example correspond with battery voltages of 13 V and 7 V respectively. The threshold voltages of the threshold switches 6 and 7, which may be built in as shown, are indicated by Uₜₕ₁ and Uₜₕ₂ respectively. Furthermore the battery protection 4 has a relay 9 which is driven by drive device 8, which is an asymmetric delay circuit in this embodiment. The relay 9 in its turn operates a relay contact 10 which is incorporated between the input terminal A and the output terminal C. When the contact 10 is closed, current is supplied to the caravan refrigerator 3, whilst no current is supplied to the caravan refrigerator 3 when the contact 10 is open. The output of the first threshold circuit 6 is connected with the input I of the asymmetric delay circuit 8 and supplies a control voltage U_{c}, whilst the output of the second threshold switch 7 is connected with the reset input R of the asymmetric delay circuit 8 and supplies a reset voltage Uᵣ, if required. The output O of the asymmetic delay circuit 8 is connected with the control input of the relay 9 and supplies a drive voltage U_{d}, if required. The first and the second threshold switches 6, 7, and the asymmetric delay circuit 8 constitute a drive device for the relay 9.

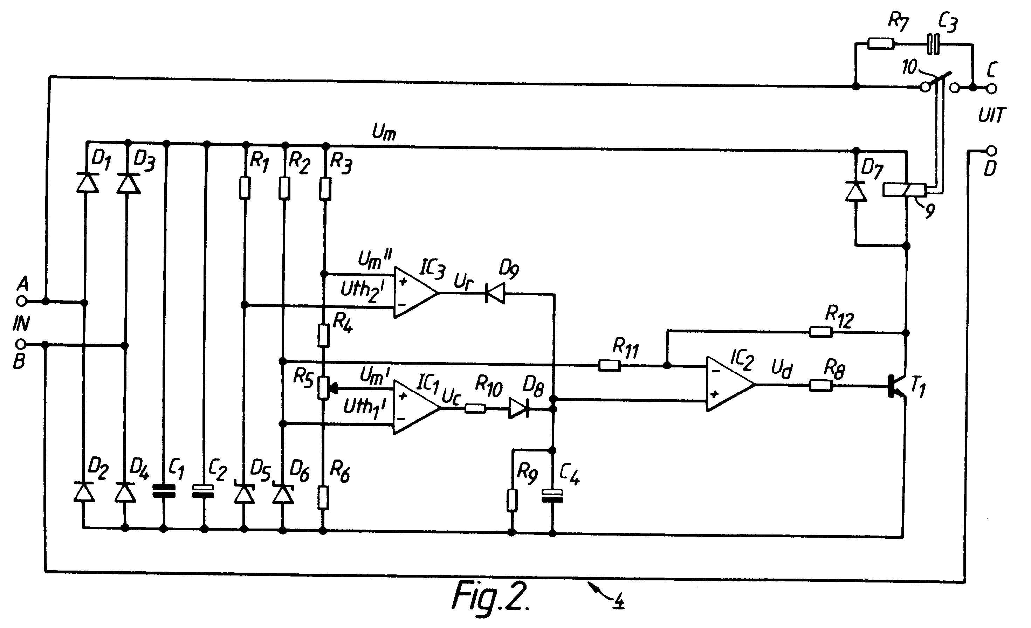

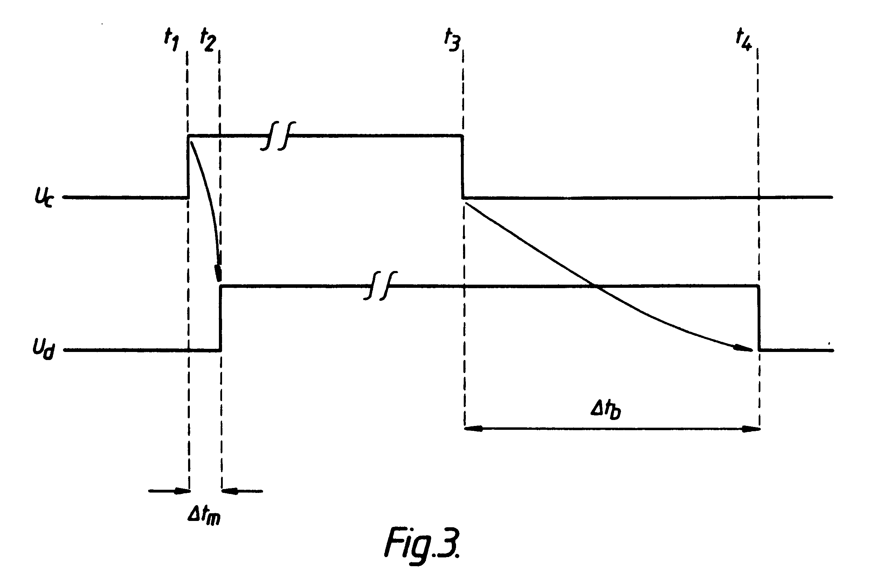

Figure 2 provides a detailed illustration of the battery protection 4 .

The voltages Uₘ′ and Uₜₕ₁′ of Figure 2 are directly proportional to the voltages Uₘ and Uₜₕ₁ of Figure 1. It applies that Uₘ′ = C₁ x Uₘ and Uₜₕ₁′ = C₁ x Uₜₕ₁, whereby C₁ is a constant. Likewise it applies that Uₘ˝ = C₂ x Uₘ and Uₜₕ₂′ = C₂ x Uₜₕ₂. The threshold voltages Uₜₕ₁ and Uₜₕ₂ cannot be directly measured in Figure 2.

The rectifier 5 of Figure 1 is formed by the diodes D1, D2, D3 and D4 and the capacitors C₁ and C2. The capacitor C₁ protects the battery protection 4 against high frequency peak voltages and interference voltages. The capacitor C2, an electrolytic capacitor, sees to it that the relay 9 has sufficient voltage when picking up. The relay 9 can only pick up when the test voltage Uₘ is higher than the threshold voltage Uₜₕ₁ of the first threshold switch 6 of Figure 1. When the contact 10 of the relay 9 closes, however, the input voltage of the circuit across the terminals A and B will immediately drop considerably. The capacitor C2 holds the higher voltage for some time, however, so that the relay 9 can keep picking up very well, as a result of which the contact pressure of the relay 10 becomes larger.

The first threshold switch 6 of Figure 1 is formed by the resistor R2, the zener diode D6 and the operational amplifier IC1, whilst the second threshold switch 7 of Figure 1 is formed by the resistor R1, a zener diode D5 and the operational amplifier IC3. There is a common resistance divider, consisting of resistors R3, R4, R5 and R6, for the two threshold switches 6, 7 (Figure 1). The zener diode D6 has a low temperature coefficient and a zener voltage of for example 5 - 6 V. The second threshold switch 7 (Figure 1), having an auxiliary threshold voltage Uₜₕ₂ which protects the relay 9 from rattling, is to operate at a very low input voltage of for example 6 - 7 V. The rectifier 5 (Figure 1) will draw about 1.5 V from the voltage, so that in this case there will only be a voltage of 5 - 5.5 V across the capacitor C2. Said voltage is too low for the zener diode D6, so that a separate zener diode D5 having a much lower voltage, such as for example 3 V, must be provided for the second threshold switch (Figure 1).

The asymmetric delay circuit 8 (Figure 1) is built up of the resistors R9, R10, R11 and R12, the diode D8, the electrolytic capacitor C4 and the operational amplifier IC2. The operational amplifiers IC1, IC2 and IC3 may be replaced by comparators, when their outputs can both supply and receive current.

The resistor R10 is a small resistor. When the control voltage U_{c} becomes high, the capacitors C4 will be charged in a short time. Said charging time determines the measuring time interval Δtm and is about equal to the RC time determined by the resistor R10 and the capacitor C4. When the control voltage U_{c} becomes low, the diode D8 will be turned off and the capacitor C4 will discharge across the resistor R9. The resistor R9 has a much larger value. The RC time determined by the resistor R9 and the capacitor C4 therefore determines the operating time interval Δtb. As already said before, the order of magnitude of the operating time interval Δtb is one minute and that of the measuring time interval Δtm is one tenth of a second.

The operational amplifier IC2, with the resistors R11 and R12, forms a Schmitt trigger circuit. When the electrolytic capacitor C4 is discharged the output voltage U_{d} of the operational amplifier IC2 will be low and the transistor T1 will be turned off, as a result of which its collector voltage will be high, for example 10 V. With a voltage of the zener diode of for example 5 V the voltage on the inverting input of the operational amplifier IC2 will about equal to 7.5 V. The relay 9 is released now. When the test voltage Uₘ rises above the threshold voltage Uₜₕ₁ of the first threshold switch 6 (Figure 1), the control voltage U_{c} will become high. The electrolytic capacitor C4 is now charged to 7.5 V in a short time. At this moment the output voltage U_{d} of IC2 will become high and the transistor T1 will start to conduct, as a result of which the collector will reach 0 V. The inverting input of the operational amplifier IC2 will reach about 2.5 V now. Because the relay 9 picks up, the test voltage Uₘ will drop considerably. The output signal U_{c} of the operational amplifier IC1 will become low and the diode D8 will be turned off. The electrolytic capacitor C4 will have to discharge across the resistor R9 to about 2.5 V. Then the output signal U_{d} of the operational amplifier IC2 will change over again. When the test voltage Uₘ drops below the (auxiliary) threshold voltage Uₜₕ₂ of the second threshold switch 7 (Figure 1), the reset voltage (auxiliary control signal) Uᵣ of the operational amplifier IC3 will become low, as a result of which the electrolytic capacitor C4 will discharge very fast across the diode D9, which is normally turned off. The battery protection circuit 4 now comes in the reset condition, that is, at the beginning of a new cycle and a new measuring time interval Δtm, therefore; which means that the relay 9 is released and can only pick up again after the electrolytic capacitor C4 has been charged via the resistor R10 and the diode D8.

The electrolytic capacitor C3 is a bipolar capacitor, because the voltage at the input IN of the battery protection 4 may be positive as well as negative. The resistor R7 and the capacitor C3 together form a spark extinguishing circuit which prevents sparking by the relay 9.

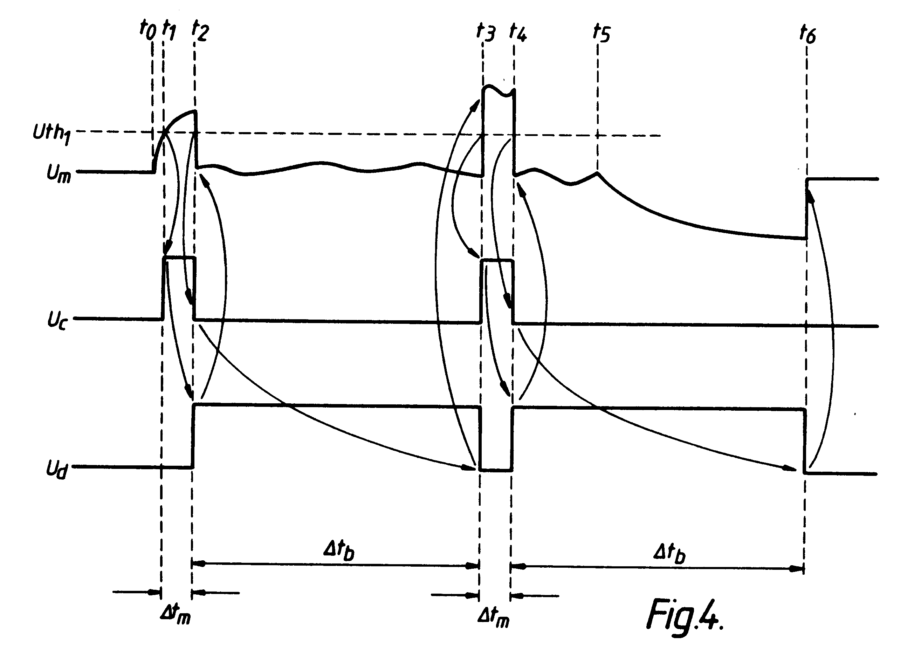

Figure 3 illustrates the transfer characteristic of the asymmetric delay circuit 8 (Figure 1). At the beginning of the measuring time interval Δtm, that is, in the reset condition, the electrolytic capacitor C4 is discharged. The output voltage of the first threshold switch (Figure 1) or, put differently, the output voltage U_{c} of the operational amplifier IC1 (Figure 1) is low, which also applies to the output voltage of the asymmetric delay circuit 8 (Figure 1) or, put differently, the output voltage U_{d} of the operational amplifier IC2 (Figure 2). When U_{c} becomes high at point of time t1, the electrolytic capacitor C4 is charged, so that after the lapse of the measuring time interval Δtm, which is determined by the resistor R10 and the electrolytic capacitor C4, U_{d} becomes high at point of time t2. When at any point of time t3 U_{c} becomes low, the diode D8 will be turned off and the electrolytic capacitor C4 will be discharged across the resistor R9. After the lapse of the operating time interval Δtb U_{d} will become low at point of time t4, whereby Δtb is determined by the resistor R9 and the electrolytic capacitor C4.

Figure 4 illustrates a practical example of various voltages as a function of time in the asymmetric delay circuit 8 (Figure 1). In this practical example the second threshold switch 7 (Figure 1) is missing, since in normal practice the test voltage Uₘ will always be higher than the auxiliary threshold voltage Uₜₕ₂ of the second threshold switch 7 (Figure 2). In other words, in this practical example the resistor R1, the zener diode D5, the operational amplifier IC3 and and the diode D9 have been left out of the battery protection circuit 4 (Figure 2)

Now Figure 4 will be discussed in combination with Figure 2. The starting point is an intitial situation, in which the car engine is switched off, as a result of which the car battery has a low voltage and the test voltage Uₘ is below the first threshold voltage Uₜₕ₁ of the first threshold switch 6. At point of time t0 in Figure 4 the engine is switched on, as a result of which the test voltage Uₘ will rise. At point of time t1 the test voltage Uₘ will be higher than the first threshold voltage Uₜₕ₁, as a result of which the control voltage U_{c} becomes high. The asymmetric delay circuit 8 (Figure 1) will start to operate and after a measuring time interval Δtm the control voltage U_{d} will become high at point of time t2. The relay 9 will pick up, as a result of which there will be a voltage drop, due to the large amount of current which will start to flow through the resistor 2 (Figure 1), as a result of which the test voltage Uₘ will drop. The test voltage Uₘ will drop below the first threshold voltage Uₜₕ₁, as a result of which the control voltage U_{c} will become low. The asymmetric delay circuit 8 (Figure 1) will now activate the second delay, which means that the operating time interval Δtb begins. After the lapse of said operating time interval Δtb the relay drive voltage U_{d} will become low. This happens at point of time t3. The relay 9 will release, as a result of which there will no longer be a voltage drop across the resistor 2 in Figure 1, so that the test voltage Uₘ will be higher than the first threshold voltage Uₜₕ₁. The output voltage U_{c} of the operational amplifier IC1 will become high, as a result of which the electrolytic capacitor C4 is charged via the resistor R10 and the diode D8. After the measuring time interval Δtm the operational amplifier IC2 will change over at point of time t4, and the control voltage U_{d} will be high again. The relay 9 picks up, the test voltage Uₘ drops below the first threshold voltage Uₜₕ₁, the output voltage U_{c} of the operational amplifier IC1 becomes low and the electrolytic capacitor C4 will start to discharge itself across the resistor R9. At point of time t5 the engine is switched off, as a result of which the battery voltage and thus the test signal Uₘ will drop considerably. When at point of time t6 the relay 9 releases, the test voltage Uₘ will rise considerably across the resistor 2 in Figure 1. In this case the test voltage Uₘ will not get above the first threshold voltage Uₜₕ₁ and the output voltage U_{c} of the operational amplifier IC1 will remain low, and the relay 9 will remain released.

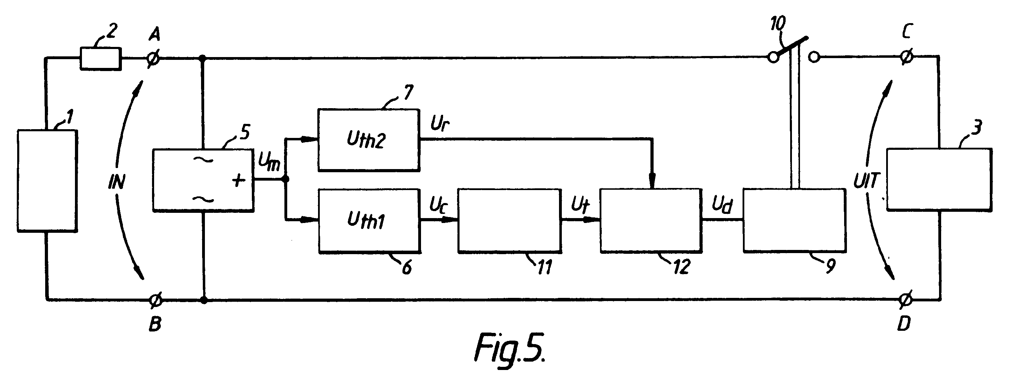

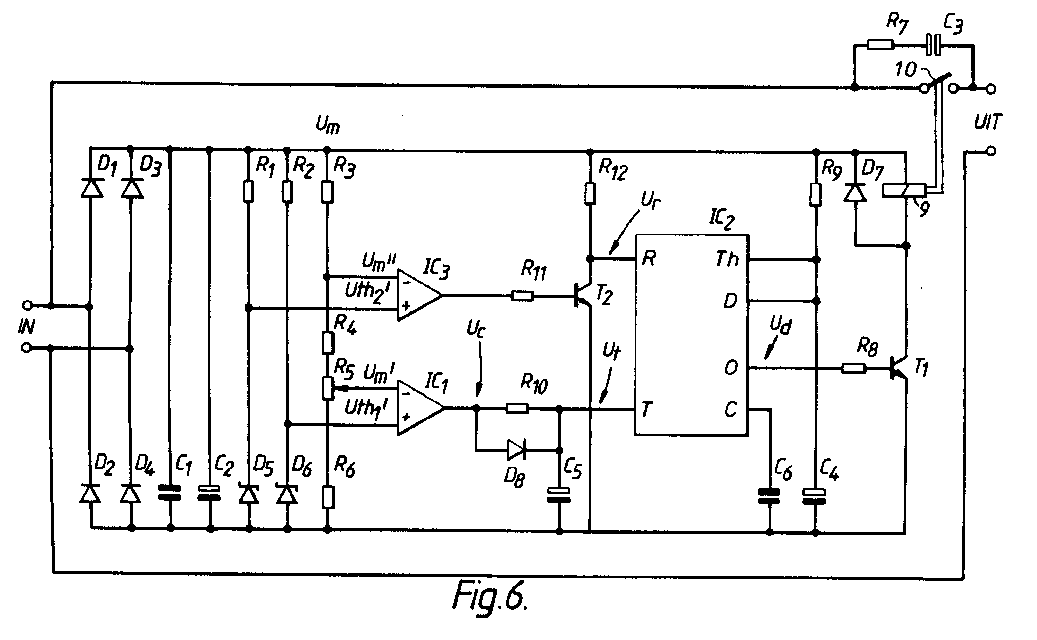

With reference to Figures 5 and 6 a second embodiment will be discussed, whereby the same or corresponding parts are indicated by the same reference numerals and will not be discussed anew. More in particular the asymmetric delay circuit 8 of Figure 1 has been replaced by an RDC filter 11 and a timer circuit 12 in Figure 5. The RDC filter 11 filters the output voltage U_{c} of the first threshold switch 6 into a trigger voltage Uₜ for the timer circuit 12, in particular for being applied to the trigger input T thereof, whereby the timer circuit 12 furthermore has a reset input R and an output O, just like the asymmetric delay circuit 8 of Figure 1, whereby the former receives the reset voltage Uᵣ from the second threshold switch 7 and the latter supplies the control voltage U_{d} for the relay 9.

As is shown in Figure 6 the RDC filter 11 of Figure 5 is built up of the resistor R10, the diode D8 and the electrolytic capacitor C5. The resistor R10 and the electrolytic capacitor C5 determine the measuring time interval Δtm. The timer circuit 12 of Figure 5 may be built up around an integrated circuit of type 555, which is the most frequently used timer circuit. Said integrated circuit is indicated by IC2 in Figure 6 and furthermore contains a threshold input Th, a discharge input D and a control input C. The control input C of the timer circuit IC2 is connected to earth via the capacitor C6 and is not used. The RC time of the timer circuit IC2 is determined by the resistor R9 and the electrolytic capacitor C4. Said RC time (R9 x C4) determines the operating time interval Δtb of the timer circuit IC2. The second threshold switch 7 in Figure 5 again comprises the operational amplifier IC3, but instead of the diode D9 in Figure 2 it comprises two resistors R11, R12 and the transistor T2, whose purpose it is to switch the reset voltage Uᵣ completely to zero volt when the output voltage of the operational amplifier IC3 becomes high. The operational amplifiers IC1 and IC3 are for example of the type 324 or 358 (which types may also be used in Figure 2), which may be accommodated in one housing. Because with this type of operational amplifier the output cannot completely switch to zero volt, the circuit with the transistor T2 is added. When, however, instead of the operational amplifier IC3 a comparator with an open collector output is selected, the transistor T2 and the resistor R11 are not necessary and the output of then comparator IC3 can be directly connected to the reset input R of the timer circuit IC2. In that case the connection of the inverting and non-inverting inputs of the comparator IC3 must be the reverse of those of the operational amplifier IC3.

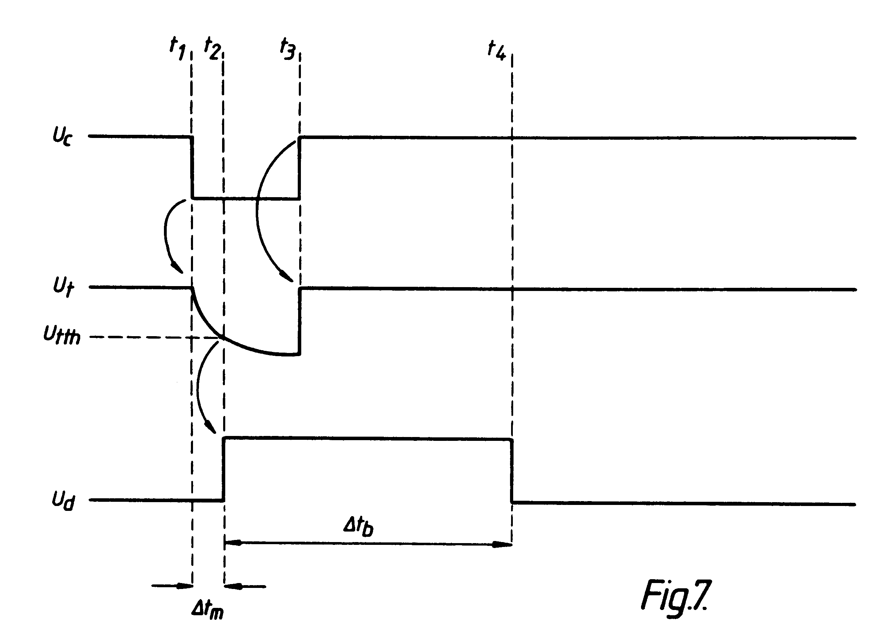

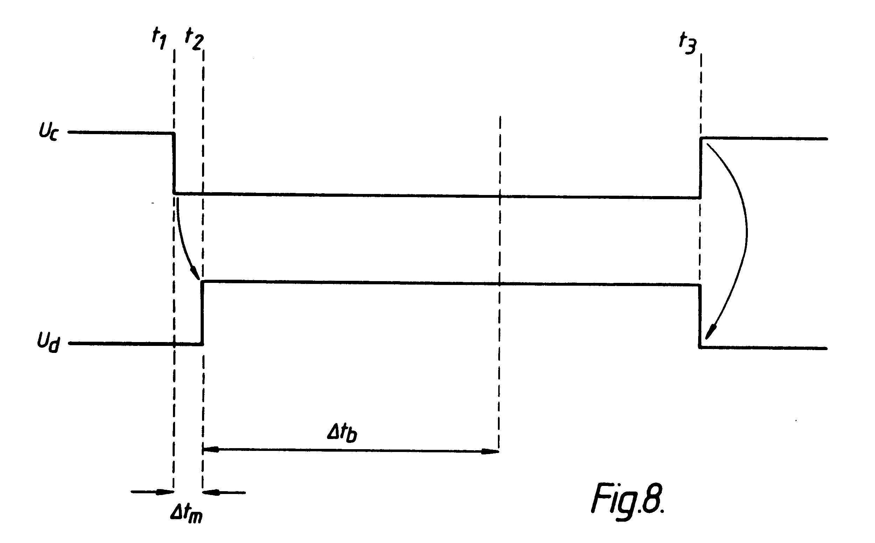

The operation of the timer circuit IC2 combined with the RDC filter R10, D8, C5 will now be discussed with reference to the transfer characteristics illustrated in Figures 7 and 8. First the possibility of Figure 7 will be described. Initially the output voltage U_{c} of the operational amplifier IC1 is high, the output voltage Uₜ of the filter R10, D8, C5 is high and the output voltage U_{d} of timer circuit IC2 is low. When the output voltage U_{c} of the operational amplifier IC1 becomes low at point of time t1, the electrolytic capacitor C5 of the filter R10, D8, C5 will start to discharge itself across the resistor R10 of the same filter. When at point of time t2 the trigger voltage Uₜ on the filter capacitor C5 drops below the trigger threshold voltage, the timer circuit IC2 will be triggered and its output voltage U_{d} will be high, since said trigger voltage Uₜ is applied at the trigger input T of said timer circuit IC2. The measuring time interval Δtm is determined by the points of time t1 and t2. After the measuring time interval Δtm the operating time interval Δtb begins. When the output voltage U_{c} of the operational amplifier IC1 becomes high at a certain point of time t3, the electrolytic capacitor C5 of the R10, D8, C5 filter will be very quickly charged via the diode D8 and the output voltage Uₜ of said filter will likewise become high. When the timer circuit IC2 elapses at point of time t4, at the end of the operating time interval Δtb, the output voltage U_{d} of the timer circuit IC2 becomes low. In Figure 7 the trigger threshold voltage is indicated by Uₜₜₕ.

Figure 8 illustrates a second possibility. Also in this case U_{c} will become low at point of time t1. After the lapse of Δtm IC2 will be triggered at point of time t2 and Δtb begins. When U_{c} remains low, however, Uₜ will remain low as well. When after the lapse of Δtb IC2 elapses, U_{d} will not become low, because U_{c}, and thus also Uₜ, is still low. Only when U_{c} becomes high at point of time t3, Uₜ will also become high and U_{d} will become low.

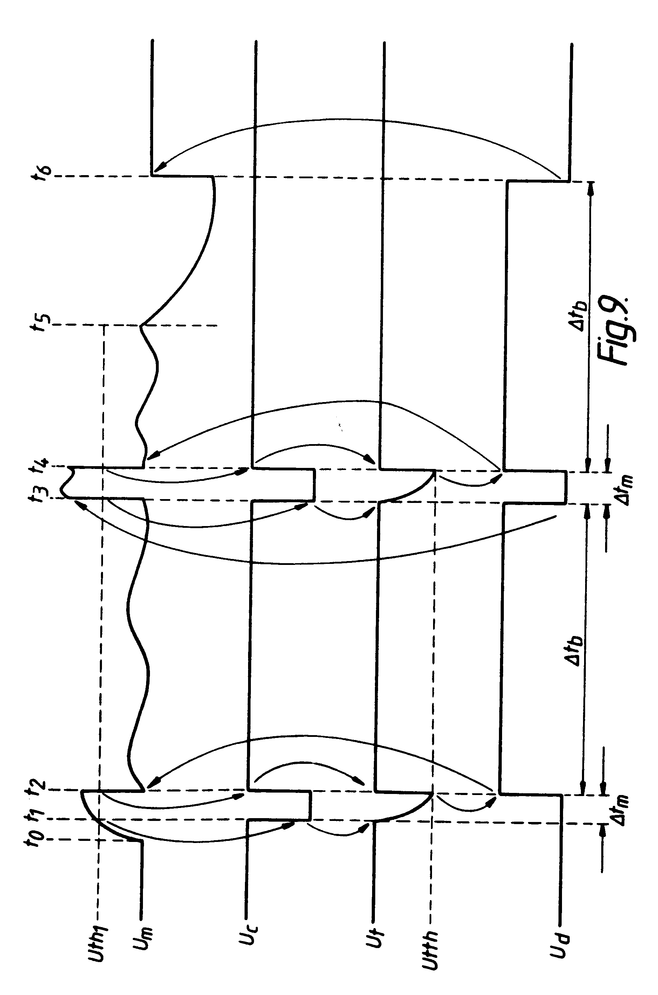

Figure 9 illustrates a practical example of the voltage gradient at various points of the combination consisting of the timer circuit IC2 and the R10, D8, C5 filter. In the beginning the engine, and thus also the dynamo which charges the battery, is switched off and the battery voltage and thus the test voltage Uₘ are low. At point of time t0 the engine is switched on. The battery voltage and thus Uₘ will rise very fast. At point of time t1 the test voltage Uₘ will be above the first threshold voltage Uₜₕ₁. As a result the output voltage U_{c} of the operational amplifier IC1 will become low, as a result of which the electrolytic capacitor C5 of the R10, D8, C5 filter will start to discharge. Because of this the output voltage, the trigger voltage Uₜ, of said filter will gradually decrease. At point of time t2 the trigger voltage Uₜ has dropped below the trigger threshold voltage Uₜₜₕ, as a result of which the timer circuit IC2 will be triggered and its output voltage U_{d} will become high. The relay 9 will pick up, as a result of which the test voltage Uₘ will suddenly decrease because of the voltage drop across the connecting wires (resistor 2 in Figure 5). The test voltage Uₘ will drop below the threshold voltage Uₜₕ₁ and the output voltage U_{c} of the operational amplifier IC1 becomes high, as a result of which also the trigger voltage Uₜ becomes high. At the end of the operating time interval Δtb the timer circuit IC2 will elapse at the point of time t3 and its output voltage U_{d} will become low, as a result of which there will no longer be a voltage drop and Uₘ becomes higher than Uₜₕ₁. At point of time t3 a new measuring time interval Δtm begins and at its end, at point of time t4, the timer circuit IC2 will be switched on again and the relay 9 will pick up. When at point of time t5 the engine is switched off, within the operating time interval Δtb following the last-mentioned measuring time interval Δtm, Uₘ will drop considerably. At point of time t6 the timer circuit IC2 elapses, the relay 9 releases and Uₘ suddenly becomes considerably higher, but does not rise above Uₜₕ₁, as a result of which the relay 9 remains disconnected.

It will be apparent that the invention cannot only be used in car-caravan combinations, but that it can also be used in campers or in other vehicles or vehicle combinations. Also in cases where said voltage drop does not occur the invention may be useful. Essential is that thanks to the invention it is prevented that a rechargeable DC power source is exhausted by a relatively heavy load, whereby the operation of the circuit is independent of the magnitude of the load current to be connected and independent of the distance and the voltage drop between the DC power source and the battery protection circuit.

## Claims

1. Switching device (4) for supplying current from a battery (1) of a vehicle, fed by a dynamo, to a refrigerator (3) to be carried along, said device comprising an input (IN) to be coupled to the battery, an output (UIT) to be coupled to the refrigerator, a relay (9) having a normally open contact (10) which couples the input and the output of the switching device and a drive device (6, 7; 8; 11, 12), coupled to the input of the switching device, for driving said relay, said drive device being provided with a control device (8; 11, 12) for driving the relay during successive cycles, whereby each cycle consists of a measuring time interval (Δtm), during which the control device does not drive the relay, which is followed by an operating time interval (Δtb), during which the control device drives the relay, characterized in that the drive device further comprises a voltage comparing device (6) having an input, which is coupled to the input of the switching device for receiving a test voltage (Um) and an output for delivering a control signal (Uc), when the test voltage is higher than a threshold voltage (Uth1) related to the nominal value of the battery, whereby at the end of a measuring time interval the control device turns the relay on after having received the control signal during a predetermined relatively short time, as a result of which an operating time interval begins and the relay is driven for a predetermined relatively long time, after which the relay only releases when the control signal is absent with as a possible additional condition that the control signal has been absent for a period of time which equals said relatively long time, as a result of which a measuring time interval begins.

2. Switching device (4) according to claim 1, characterized in that the drive device (6, 7; 8; 11, 12) is furthermore provided with an auxiliary voltage comparing device (7) having an input, which is coupled to the input (IN) of the switching device for receiving the test voltage (Um) and an output for delivering an auxiliary control signal (Ur), when the test voltage is lower than an auxiliary threshold voltage (Uth2) which is lower than the threshold voltage (Uth1) and which is higher than a voltage related to the maximum release voltage of the relay, which auxiliary control signal causes the control device (8; 11, 12) to break off a running cycle prematurely by de-energizing the relay, as a result of which a measuring time interval (Δtm) begins.

3. Switching device according to claims 1 or 2, characterized in that the control device (8; 11, 12) comprises means for setting at least one of said relatively short and long times.

4. Switching device according to any one of the preceding claims, characterized in that the voltage comparing device (6) and/or the auxiliary voltage comparing device (7) is a threshold value switch.

5. Switching device according to any one of the preceding claims, characterized in that the control device (8; 11, 12) is an asymmetric delay circuit (8).

6. Switching device according to any one of the claims 1 - 4, characterized in that the control device (8; 11, 12) comprises a timer circuit (12).

7. Switching device according to claim 6, characterized in that an RDC filter (11) is connected before the timer circuit (12).

8. Method of supplying, through a relay (9), current from a battery (1) of a vehicle, fed by a dynamo, to a refrigerator (3) to be carried along by means of a switching device (4) of which the input (IN) is coupled to the battery, wherein the method comprises the step of driving the relay during successive cycles, each cycle consisting of a measuring time interval (Δtm) and an operating time interval (Δtb) following said measuring time interval, characterized in that the method further comprises the following steps: measuring the input voltage of the switching device with a released relay during every measuring time interval; providing the refrigerator with current during every operating time interval with a picked-up relay; constantly comparing the input voltage with a threshold voltage (Uth1) related to the nominal battery voltage; starting an operating time interval when during a respective measuring time interval the input voltage measured has been higher than the threshold voltage (Uth1) for a predetermined relatively short time; causing the relay to pick up during a respective operating time interval for a predetermined relatively long time; thereafter only realising the relay and starting a respective measuring time interval when the input voltage is lower than the threshold voltage, with as a possible additional condition that the input voltage has been lower than the threshold voltage for a period of time which equals said relatively long time.

9. Method according to claim 8, characterized in that said method comprises the further steps of constantly comparing the input voltage with an auxiliary threshold voltage (Uth2) which is lower than the threshold voltage (Uth1) and higher than a voltage related to the maximum release voltage of the relay; and prematurely breaking off a running cycle when the input voltage is lower than the auxiliary threshold voltage.

## Patentansprüche

1. Schaltungsanordnung (4) für die Stromversorgung eines mitgeführten Kühlschranks (3) durch eine mittels einer Dynamomaschine gespeisten Batterie (1) eines Fahrzeugs, wobei diese Anordnung einen Eingang (IN) umfaßt, der an die Batterie angeschlossen wird, einen Ausgang (UIT), der an den Kühlschrank angeschlossen wird, ein Relais (9) mit einem normalerweise offenen Kontakt (10), der den Eingang und Ausgang der Schaltungsanordnung und einer Treiberanordnung (6,7;8;11,12) verbindet, gekoppelt mit dem Eingang der Schaltungsanordnung zum Ansteuern dieses Relais, wobei diese Treiberanordnung mit einer Kontroll-anordnung (8;11,12) zum Ansteuern des Relais während aufeinanderfolgender Zyklen versehen ist, wobei jeder Zyklus aus einem Meßzeitintervall (Δ tm) besteht, während dem die Kontrollanordnung das Relais nicht treibt, gefolgt von einem Operationszeitintervall (Δtb), während dem die Kontrolleinheit das Relais treibt, dadurch gekennzeichnet, daß die Treiberanordnung außerdem eine Spannungsvergleichanordnung (6) mit einem Eingang umfaßt, der mit dem Eingang der Schaltungsanordnung verbunden ist, um eine Testspannung (Um) aufzunehmen, und einem Ausgang zum Abgeben eines Kontrollsignals (Uc), wenn die Testspannung größer ist als eine Schwellenspannung (Uth1) entsprechend dem Nominalwert der Batterie, wobei am Ende eines Meßzeitintervalls die Kontrollanordnung das Relais einschaltet nach dem Empfang des Kontrollsignals in einer vorgegebenen relativ kurzen Zeit, worauf als Ergebnis davon ein Operationszeitintervall beginnt und das Relais für eine relativ lange vorgegebene Zeit angesteuert wird, nach der das Relais nur wieder in den Ruhezustand zurückkehrt, wenn das Kontrollsignal nicht mehr anliegt, mit der möglichen zusätzlichen Bedingung, daß das Kontrollsignal eine derartige Zeitspanne nicht angelegen hat, die dieser relativ langen Zeit entspricht, und als Ergebnis davon ein Meßzeitintervall beginnt.

2. Schaltungsanordnung (4) nach Anspruch 1, dadurch gekennzeichnet, daß die Treiberanordnung (6,7;8;11,12) außerdem mit einer Hilfsspannungsvergleicheinheit (7) versehen ist, die einen Eingang aufweist, der mit dem Eingang (1N) der Schaltungsanordnung zum Empfang der Testspannung (Um) verbunden ist, und einen Ausgang zur Abgabe eines Hilfskontrollsignals (Ur), sobald die Testspannung niedriger ist als eine Hilfsschwellenspannung (Uth2), die kleiner ist als die Schwellenspannung (Uth1) und größer ist als eine Spannung, die mit der maximalen Auslösespannung des Relais verbunden ist, wobei dieses Hilfskontrollsignal die Kontrollanordnung (8;11,12) zum vorzeitigen Abbruch eines Zyklus veranlaßt durch Abschalten der Energiezufuhr des Relais, wodurch ein Meßzeitintervall (Δ tm) beginnt.

3. Schaltungsanordnung nach Anspruch 1 oder 2, dadurch gekennzeichnet, daß die Kontrollanordnung (8;11,12) Vorrichtungen zum Einstellen wenigstens einer dieser relativ langen oder kurzen Zeiten umfaßt.

4. Schaltungsanordnung nach einem der vorhergehenden Ansprüche, dadurch gekennzeichnet, daß die Spannungsvergleichanordnung (6) und/oder die Hilsspannungsvergleichanordnung (7) als Schwellspannungsschalter ausgebildet ist.

5. Schaltungsanordnung nach einem der vorhergehenden Ansprüche, dadurch gekennzeichnet, daß die Kontrolleinheit (8;11,12) eine asymmetrische Verzögerungsschaltung (8) ist.

6. Schaltungsanordnung nach einem der Ansprüche 1 - 4, dadurch gekennzeichnet, daß die Kontrollanordnung (8;11,12) ein Zeitschaltglied (12) umfaßt.

7. Schaltungsanordnung nach Anspruch 6, dadurch gekennzeichnet, daß dem Zeitschaltglied (12) ein RDC-Filter (11) vorgeschaltet ist.

8. Verfahren zur Stromversorgung mittels eines Relais (9) eines mitgeführten Kühlschranks (3) durch eine mittels einer Dynamomaschine gespeisten Batterie (1) eines Fahrzeugs, ausgeführt mittels einer Schaltungsanordnung (4), deren Eingang (lN) an der Batterie angeschlossen ist, wobei das Verfahren den Schritt des Treibens des Relais während aufeinanderfolgender Zyklen umfaßt, jeder Zyklus aus einem Meßzeitintervall (Δ tm) und einem Operationszeitintervall (Δ tb) besteht, das diesem Meßzeitintervall folgt, dadurch gekennzeichnet, daß das Verfahren darüber hinaus folgende Schritte umfaßt:
Messen der Eingangsspannung der Schaltungsanordnung mit einem entlasteten Relais während jedes Meßzeitintervalls,
Versorgen des Kühlschranks mit Strom während jedes Operationszeitintervalls mit einem angesteuerten Relais,
Ständiges Vergleichen der Eingangsspannung mit einer Schwellenspannung (Uth1), die verbunden ist mit der nominalen Batteriespannung,
Beginn eines Operationszeitintervalls, sobald die gemessene Eingangsspannung während eines zugehörigen Meßzeitintervalls für eine vorgegebene relativ kurze Zeit größer war als die Schwellenspannung (Uth1), was zum Ansprechen des Relais während eines zugehörigen Operationszeitintervalls führt für eine relativ lange vorgegebene Zeit,
danach Lösen des Relais und Neubeginn eines jeweiligen Meßzeitintervalls nur, wenn die Eingangsspannung geringer ist als die Schwellenspannung, mit der möglichen zusätzlichen Bedingung, daß die Eingangsspannung während einer Zeit, die dieser relativ langen Zeit entspricht, geringer war als die Schwellenspannung.

9. Verfahren nach Anspruch 8, dadurch gekennzeichnet, daß dieses Verfahren außerdem die folgenden Schritte umfaßt:
Ständiges Vergleichen der Eingangsspannung mit einer Hilfsschwellenspannung (Uth2), die niedriger ist als die Schwellenspannung (Uth1) und höher als eine der maximalen Abgabespannung der Batterie zugeordnete Spannung, und
vorzeitiges Abbrechen eines laufenden Zyklus, wenn die Eingangsspannung geringer ist als die Hilfsschwellenspannung.

## Revendications

1. Dispositif de commutation (4) pour fournir du courant issu d'une batterie (1) d'un véhicule, chargée par une dynamo, à un réfrigérateur (3) transporté, ledit dispositif comprenant une entrée (IN) destinée à être reliée à la batterie, une sortie (UIT) destinée à être reliée au réfrigérateur, un relais (9) ayant un contact de travail (10) qui relie l'entrée et la sortie du dispositif de commutation, et un dispositif d'excitation (6, 7; 8; 11, 12) relié à l'entrée du dispositif de commutation pour exciter ledit relais, ledit dispositif d'excitation étant muni d'un dispositif de commande (8; 11, 12) pour exciter le relais pendant des cycles successifs, chaque cycle étant composé d'un intervalle de temps de mesure (Δtm) pendant lequel le dispositif de commande n'excite pas le relais, qui est suivi d'un intervalle de temps de fonctionnement (Δtb) pendant lequel le dispositif de commande excite le relais, caractérisé en ce que le dispositif d'excitation comprend en outre un dispositif comparateur de tension (6) ayant une entrée qui est reliée à l'entrée du dispositif de commutation pour recevoir une tension de test (Um) et une sortie pour délivrer un signal de commande (Uc) lorsque la tension de test est supérieure à une tension de seuil (Uth1) liée à la valeur nominale de la tension de la batterie, le dispositif de commande fermant le relais à la fin d'un intervalle de temps de mesure après avoir reçu le signal de commande pendant un temps relativement court, ce qui a pour résultat qu'un intervalle de temps de fonctionnement commence et le relais est excité pendant un temps relativement long, après quoi le relais ne se désexcite que lorsque le signal de commande est absent, avec une condition supplémentaire possible que le signal de commande ait été absent pendant un intervalle de temps qui est égal audit temps relativement long, ce qui a pour résultat qu'un intervalle de temps de mesure commence.

2. Dispositif de commutation (4) selon la revendication 1, caractérisé en ce que le dispositif d'excitation (6, 7; 8; 11, 12) est en outre muni d'un dispositif comparateur de tension auxiliaire (7) ayant une entrée qui est reliée à l'entrée (IN) du dispositif de commutation pour recevoir la tension de test (Um), et une sortie pour délivrer un signal de commande auxiliaire (Ur) lorsque la tension de test est inférieure à une tension de seuil auxiliaire (Uth2) qui est inférieure à la tension de seuil (Uth1) et qui est supérieure à une tension liée à la tension maximale de relâchement du relais, lequel signal de commande auxiliaire amène le dispositif de commande (8; 11, 12) à interrompre un cycle de fonctionnement prématurément en désexcitant le relais, ce qui a pour résultat qu'un intervalle de temps de mesure (Δtm) commence.

3. Dispositif de commutation selon la revendication 1 ou 2, caractérisé en ce que le dispositif de commande (8; 11, 12) comprend des moyens pour régler au moins un desdits temps relativement court et long.

4. Dispositif de commutation selon l'une quelconque des revendications précédentes, caractérisé en ce que le dispositif comparateur de tension (6) et/ou le dispositif comparateur de tension auxiliaire (7) est un interrupteur à valeur de seuil.

5. Dispositif selon l'une quelconque des revendications précédentes, caractérisé en ce que le dispositif de commande (8; 11, 12) est un circuit à retard asymétrique (8).

6. Dispositif de commutation selon l'une des revendications 1 à 4, caractérisé en ce que le dispositif de commande (8; 11, 12) comprend un circuit temporisateur (12).

7. Dispositif de commutation selon la revendication 6, caractérisé en ce qu'un filtre RDC (11) est monté avant le circuit temporisateur (12).

8. Procédé pour fournir, par l'intermédiaire d'un relais (9), du courant issu d'une batterie (1) d'un véhicule, chargée par une dynamo, à un réfrigérateur (3) transporté, au moyen d'un dispositif de commutation (4) dont l'entrée (IN) est reliée à la batterie, dans lequel le procédé comprend l'étape consistant à exciter le relais pendant des cycles successifs, chaque cycle se composant d'un intervalle de temps de mesure (Δtm) et d'un intervalle de temps de fonctionnement (Δtb) suivant ledit intervalle de temps de mesure, caractérisé en ce que le procédé comprend en outre les étapes suivantes: mesurer la tension d'entrée du dispositif de commutation avec le relais relâché pendant chaque intervalle de temps de mesure; fournir au réfrigérateur du courant pendant chaque intervalle de temps de fonctionnement avec le relais excité; comparer en permanence la tension d'entrée à une tension de seuil (Uth1) liée à la tension nominale de la batteire; commencer un intervalle de temps de fonctionnement lorsque, pendant un intervalle de temps de mesure respectif, la tension d'entrée mesurée a été supérieure à la tension de seuil (Uth1) pendant un temps prédéterminé relativement court; amener le relais à s'exciter dans un intervalle de temps de fonctionnement respectif pendant un temps prédéterminé relativement long; après cela seulement, désexciter le relais et commencer un intervalle de temps de mesure respectif lorsque la tension d'entrée est inférieure à la tension de seuil, avec une condition supplémentaire possible que la tension d'entrée ait été inférieure à la tension de seuil pendant une période de temps qui est égale audit temps relativement long.

9. Procédé selon la revendication 8, caractérisé en ce que ledit procédé comprend les étapes supplémentaires consistant à comparer en permanence la tension d'entrée à une tension de seuil auxiliaire (Uth2) qui est inférieure à la tension de seuil (Uth1) et supérieure à une tension liée à la tension maximale de relâchement du relais; et interrompre prématurément un cycle de fonctionnement lorsque la tension d'entrée est inférieure à la tension de seuil auxiliaire.
